# EUROPEAN PATENT SPECIFICATION

(11) **EP 1 229 979 B1**
(45) Date of publication and mention of the grant of the patent: **15.09.2004**
(21) Application number: 00964519.3
(22) Date of filing: 06.10.2000
(51) Int. Cl.: B01D 21/06, B01D 21/08, B01D 21/24, B03B 11/00

(54) **SEPARATION OF SILT AND WATER**
TRENNUNG VON SILT UND WASSER
SEPARATION DU LIMON ET DE L'EAU

(30) Priority: 09.10.1999 GB 9923853
(43) Date of publication of application: 14.08.2002
(73) Proprietor: Finlay Hydrascreens (Omagh) Ltd., Omagh Co. Tyrone N. Ireland BT78 5PN (GB)
(72) Inventor: LYONS, David, Co. Tyrone Northern Ireland (GB); NETHERY, John, Omagh Co. Tyrone Northern Ireland (GB)
(74) Representative: Gosnall, Toby
(86) International application number: PCT/GB2000/003827
(87) International publication number: WO 2001/026771

(56) References cited:
- EP-A- 0 785 027
- DE-A- 3 739 896
- DE-A- 3 817 948
- DE-U- 29 620 825
- GB-A- 2 280 384
- GB-A- 2 316 336
- US-A- 2 089 160
- US-A- 2 110 721
- US-A- 2 215 185
- US-A- 3 962 086
- US-A- 4 710 290

## Description

This invention relates to the separation of silt and water. The invention is particularly concerned with the drying of inorganic slurries such as may result from washing of sand and gravel, and in particular the washing of building sand, which results in the washing water bearing a burden of silt.

Freshly won sand or gravel is typically mixed with argillaceous material and this has to be removed from the sand or gravel before that sand or gravel is incorporated into concrete in a building or other civil engineering structure. If the argillaceous material is not removed from the sand or gravel, this severely weakens the concrete with potentially disastrous results. The practice has accordingly arisen of washing the sand or gravel to remove the argillaceous material. Because of its grain size, sand or gravel tends to settle quite quickly in the washing water and can easily be removed and the process results in a body of washing water carrying a burden of argillaceous silt. An apparatus for washing sand is disclosed in GB-A-2 280 384.

It is also known to manufacture sand or other building material by crushing rock, and it is known to wash the crushed material to remove dust. Again, the result is water loaded with fines. Similarly, soil washing operations and certain quarrying applications result in the formation of a slurry.

Hitherto such a slurry has been supplied to settling lagoons where the silt is allowed to settle out over a period of time, whereafter the then silt free water can be discharged from the lagoon to the environment or for re-use.

This settling process takes a considerable period of time and the settling lagoons occupy a substantial area of land. Both of these factors are disadvantages.

It is an object of the present invention to provide a method of and apparatus for settling silt from water in which these disadvantages are alleviated.

According to the present invention there is provided an apparatus for separating silt from water which comprises a settling tank having an inlet section and an outlet section wherein the base of the inlet section is at a lower level than the base of the outlet section, inlet means comprising an inlet conduit leading to a pre-reaction vessel which communicates at its base with the inlet section of the settling tank, said inlet conduit being valved, and the apparatus being equipped with dosing means for the addition of flocculant to an inlet portion thereof, removal means for removing settled material from the inlet section of the settling tank and means for sweeping settled material along the tank from an outlet section thereof towards the inlet section thereof, and an outlet for the discharge of water over weir means.

The invention includes the use of a sand or gravel washing apparatus comprising a washing tank, means for supplying said washing tank with sand or gravel and washing water, removal means for removing the settled sand or gravel from an inlet section of the tank and means for sweeping the settled sand or gravel along the tank from an outlet section thereof towards such inlet section, and an outlet for the discharge of silt and water to a settling apparatus for separating silt from water as herein defined.

The invention extends to a method of separating silt from water which comprises passing a silt/water mixture to an inlet section of a settling tank via an inlet conduit leading to a pre-reaction vessel which communicates at its base with the settling tank, wherein the base of the inlet section of the settling tank is at a lower level than the base of its outlet section dosing the silt/water mixture with a flocculant, removing settled material from the inlet section of the tank, sweeping settled material along the tank from an outlet section towards such inlet section and discharging substantially silt-free water over an outlet weir.

The invention further extends to a method of washing sand or gravel comprising supplying sand or gravel and washing water to a washing tank allowing washed sand or gravel to settle and removing it from an inlet section of the tank, sweeping settled sand or gravel along the tank from an outlet section thereof to the inlet section for removal, passing used, silt containing water from the washing tank and separating the silt from the water by a method as herein defined.

The argillaceous silt which results from the washing of land-won sand or gravel typically has rather small grain sizes, usually of the order of 75 µm down to zero. Because of this small grain size the silt is extremely slow to settle naturally. The use of a method or apparatus according to the present invention greatly speeds up this process and allows a rapid separation of the silt from the water and without occupying a large area of land. The invention is also of value in the removal of water from slurries resulting from the washing of sea-dredged gravel which slurries are largely sand-based, with a low to moderate content of clay.

In preferred embodiments of the invention there is a said inlet conduit and pre-reaction vessel at each side of the settling tank. This promotes the throughput of the apparatus.

Most preferably, said dosing means is arranged to add said flocculant to the or a said inlet conduit. The flocculant and silt/water mixture are thereby encouraged to mix at an early stage in processing and this promotes settling of the silt, even in the pre-reaction vessel(s).

Advantageously the or a said inlet conduit is fed from a header tank. The use of a header tank promotes continuity of feed of material to the inlet conduit and it also acts to stabilise the pressure head with which the silt-burdened water is fed to the pre-reaction vessel and thus stabilises conditions within the system.

In some preferred embodiments of the invention the or a pre-reaction vessel at at least one side of the settling tank is in fluid flow communication with a secondary pre-reaction vessel over weir means located therebetween, the or each such secondary pre-reaction vessel also being in communication at its base with the settling tank.

We have found that such a system promotes rapid settling. A substantial proportion of settling of the silt takes place in the primary pre-reaction vessel, and water having a lower burden of silt may pass over the weir into the secondary pre-reaction vessel where a further settling can take place.

In such embodiments it is preferred that the or at least one secondary pre-reaction vessel is in fluid flow communication over weir means with a secondary fluid discharge vessel. The water passing into the discharge vessel may be fed to the settling tank or used for other purposes. In some circumstances the water from the fluid discharge vessel may even be clean enough for passing to the environment.

Advantageously the or at least one said weir means bounding a said secondary pre-reaction vessel is adjustable in height. This facilitates control of the system and promotes cleanliness of the water fed to the secondary discharge vessel.

In preferred embodiments of the invention the base of the or each pre-reaction vessel slopes downwardly towards the inlet section of the settling tank. This promotes the flow of settled silt into the inlet section of the settling tank.

Communication between any said pre-reaction vessel and the settling tank is preferably via a submerged throat. The use of such a throat tends to inhibit return flow of silt from the settling tank into the pre-reaction vessel and it stabilises the settled layer of silt particularly when it is wholly submerged in the silt layer. Preferably means is provided for adjusting the size of such throat to control flow therethrough.

Preferably spraying means is provided for spraying the interior of the or a said pre-reaction vessel for clearing accumulated silt. Such spraying conveniently takes place between runs or at the end of a run when the settling tank is substantially empty and the adoption of this feature allows periodical cleaning of that part of the apparatus.

Advantageously also, spraying means is provided for spraying water onto said removal means for clearing accumulated silt.

The removal means may be sprayed at the end of a run or between runs, or it may be sprayed while the apparatus is in operation.

The spraying means is suitably provided with water which has been separated from silt using apparatus according to the invention. Depending on the circumstances, and the cleanliness of the water which is required for such spraying, the water may be taken from the settling tank from the outlet of the settling tank or from a secondary fluid discharge vessel when such is present. Any of these provides a convenient source of spraying water.

In the most preferred embodiments of the invention the inlet section of the settling tank is deeper than its outlet section. This promotes and facilitates separation and removal of the silt from the water.

In preferred embodiments of the invention the outlet section is of part circular cross-section, and the sweeping means comprises a helical sweeping blade, and means for driving such blade in rotation about its axis. This is a particularly simple and convenient way of keeping the base of the outlet section of the settling tank clear of settled material.

Said removal means preferably comprises a bucket wheel. Such is a simple and convenient way of continuously removing settled silt material from the settling tank.

It will be appreciated that settling is a continuous process and that settlement continues while material is held within a bucket of the bucket wheel. In the result, buckets rising from the settling tank will tend to contain a lower layer of settling silt with a relatively clear layer of water above.

It is desirable that as little water as possible should be withdrawn for discharge with the silt and it is accordingly preferred that said bucket wheel includes buckets which comprise leakage ports for the preferential discharge of water and retention of settled material. Thus, water picked up by the buckets can be allowed to leak back into the settling tank and relatively dry silt is removed.

In the most preferred embodiments of the invention, any leakage ports in a said bucket are confined to an upper region of the bucket. Clearly the upper part of the bucket will depend on where it is on the bucket wheel. When speaking of an upper or lower region of a bucket, we denote the upper or lower region of the bucket when it is in the orientation in which it is capable of retaining the maximum amount of fluid. Depending on the shape of the rim of the bucket, this will usually be at about 90° before the bucket reaches the top of the wheel. Advantageously, any leakage ports in a said bucket are confined to the upper third of the bucket. In this way, surface water which has accumulated in a bucket due to further settling of silt has the opportunity to run off, and by adopting this feature, we have found that little free water remains in the silt by the stage any given bucket has reached the top of the wheel.

In preferred embodiments of the invention the radially outer face of each bucket is provided with side flanges so as together to define a discharge path for the contents of a next successive bucket. This promotes the discharge from the bucket in a desired direction and helps to minimise inadvertent discharge of the silt back into the settling tank.

Advantageously at least one such side flange is perforated for the preferential discharge of water and retention of settled material. This further promotes separation of water from silt.

It is especially suitable to provide one or more run-off strips in a said radially outer bucket face for guiding liquid to those perforation(s) in a flange.

A canopy may be provided over the bucket wheel, at least over a discharge quadrant of the wheel. The canopy may be of a flexible material which will drape to adapt itself to the outer profile of the wheel. The canopy promotes retention of the silt in the buckets of the wheel until just before they reach the discharge position. Without the canopy the silt from a bucket may cascade over the preceding bucket or buckets. The canopy also restrains the silt from falling to either side of the bucket wheel.

Preferably a sleeve is provided in a said pre-reaction vessel which surrounds said inlet conduit at its outlet end, and which, with said inlet conduit, defines an annular fluid flow passage. The use of such an inlet sleeve has been found to promote settling of the silt from the water.

Such a sleeve is preferably adjustable in height so as to vary its projection beyond the outlet end of the inlet conduit. This provides a valuable control parameter for varying settling conditions to cater for different silt loading in the water supplied to the apparatus and for other variables in the operating system.

According to a second aspect of the invention there is provided method of washing sand or gravel comprising supplying the sand or gravel and washing water to a washing tank, allowing washed sand or gravel to settle and removing it from an inlet section of the tank, sweeping settled sand or gravel along the tank from an outlet section thereof to the inlet section for removal, passing used, silt-containing water from the washing tank to an inlet section of a settling tank via an inlet conduit leading to a pre-reaction vessel which communicates at its base with the settling tank, wherein the base of the inlet section of the settling tank is at a lower level than the base of its outlet section, dosing the silt/water mixture with a flocculant, removing settled material from the inlet section of the tank, sweeping settled material along the tank from an outlet section towards such inlet section and discharging substantially silt-free water over an outlet weir.

A preferred embodiment of the invention will now be described by way of example only and in greater detail with reference to the accompanying diagrammatic drawings in which:
**Figure 1** is an elevational view of an inlet end of a silt and water separating apparatus in accordance with the invention;
**Figure 2** is a side elevation of the apparatus of Figure 1:
**Figure 3** is a plan view showing the inlet and outlet ends of the apparatus of Figure 1; ;
**Figure 4** is a sectional view through silt removing means viewed in a direction which is opposite to that of Figure 2;
**Figure 5** is a detailed view of a silt removing bucket; and
**Figure 6** shows a weir arrangement.

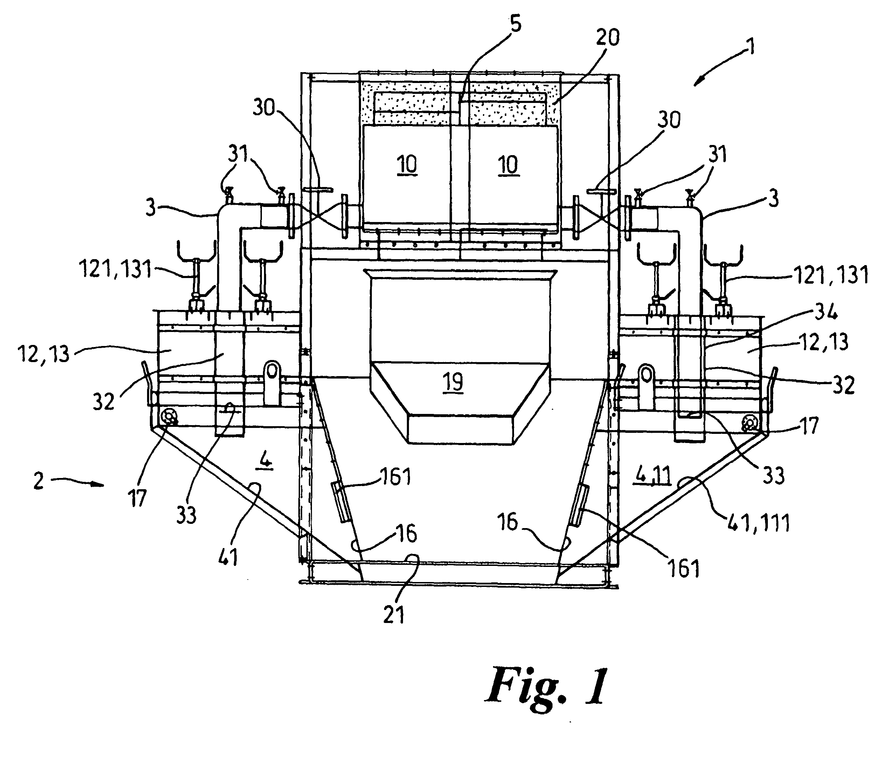

With reference to Figures 1 to 3 apparatus for separating silt from water in accordance with the invention comprises a settling tank 1 having an inlet section 2 which is fed by inlet means comprising an inlet conduit 3 leading to a pre-reaction vessel 4 which communicates at its base with the inlet section 2 of the settling tank 1. The inlet conduit is supplied with a valve 30 and it is also equipped with dosing means 31 whereby a flocculant can be added to a silt and water stream flowing in the inlet conduit 3. A means comprising twin bucket wheels 5 is provided for removing settled material from the inlet section 2 of the tank 1. The tank 1 has an outlet section 6 which has a hemispherical base. A helical screw blade 7 works within that hemispherical base 6 to sweep any settled material along from the outlet section of the tank to its inlet section 2. At the outlet end of the tank 1 cleaned water discharges over a weir 8 to a discharge pipe 9.

Broadly similar apparatus but which omits the inlet conduits 3 and side pre-reaction vessels 4 may be used for washing sand or gravel and such apparatus may in accordance with this invention be arranged to discharge silt laden water to the input of a silt and water separating apparatus as shown in the drawings.

As shown, there is an inlet conduit 3 and pre-reaction vessel 4 at each side of the apparatus. A header tank 10 is provided for the initial receipt of silt laden water and for feeding the inlet conduits 3.

At each side of the settling tank 1 the pre-reaction vessel 4 is in communication with a secondary pre-reaction vessel 11. Communication between these two vessels is over a weir 12. Controls 121 are provided for raising and lowering the weir 12. The secondary pre-reaction vessel 11 at each side of the settling tank is in communication with the tank inlet end section 2 in the same way as the primary pre-reaction vessel 4.

The secondary pre-reaction vessel 11 is likewise in contact over a weir 13 with a secondary discharge vessel 14. Weir controls 131 are provided for these secondary weirs.

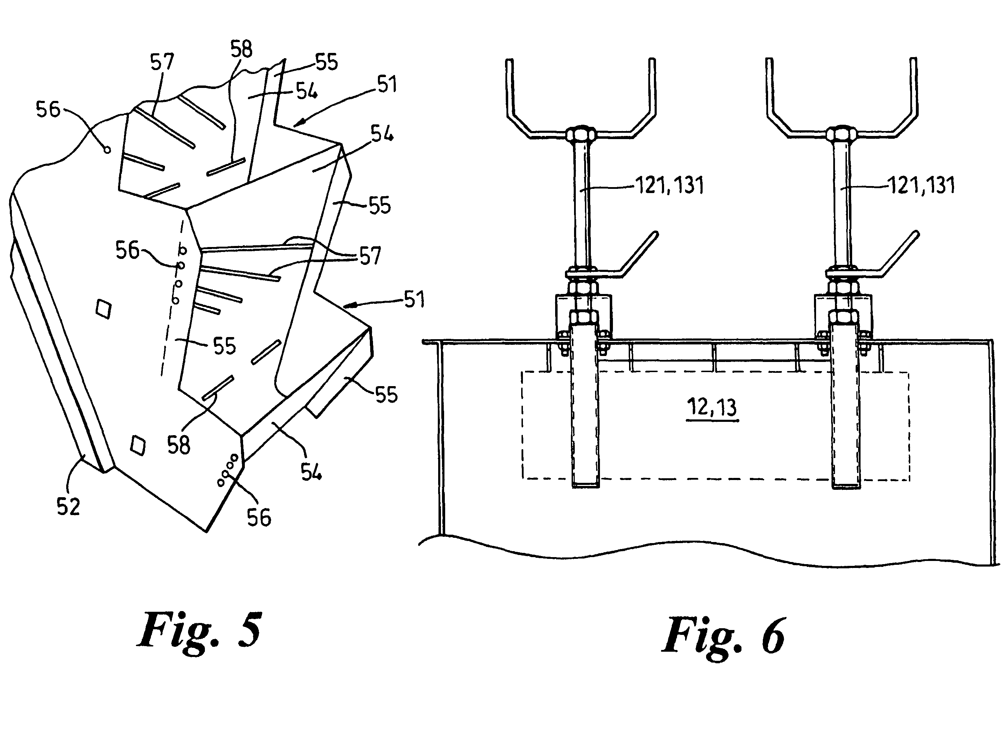

The weir control means and weirs are shown in greater detail in Figure 6.

As shown particularly in Figure 1 the bases 41, 111 of the pre-reaction vessels 4, 11 slope downwardly towards the inlet section 2 of the settling tank. The side pre-reaction vessels 4, 11 communicate with the inlet section 2 of the settling tank by means of a submerged throat such as that shown at 16 in Figure 1. Means such as a slide plate 161 may be provided for adjusting the size of such throat to control flow therethrough.

Spray heads 17 are provided for spraying the interior of the pre-reaction vessels 4, 11 after they have been emptied in order to clear accumulated silt which is sticking to their walls. Similarly, spray heads 18 are provided for spray cleaning the buckets of the bucket wheel 5.

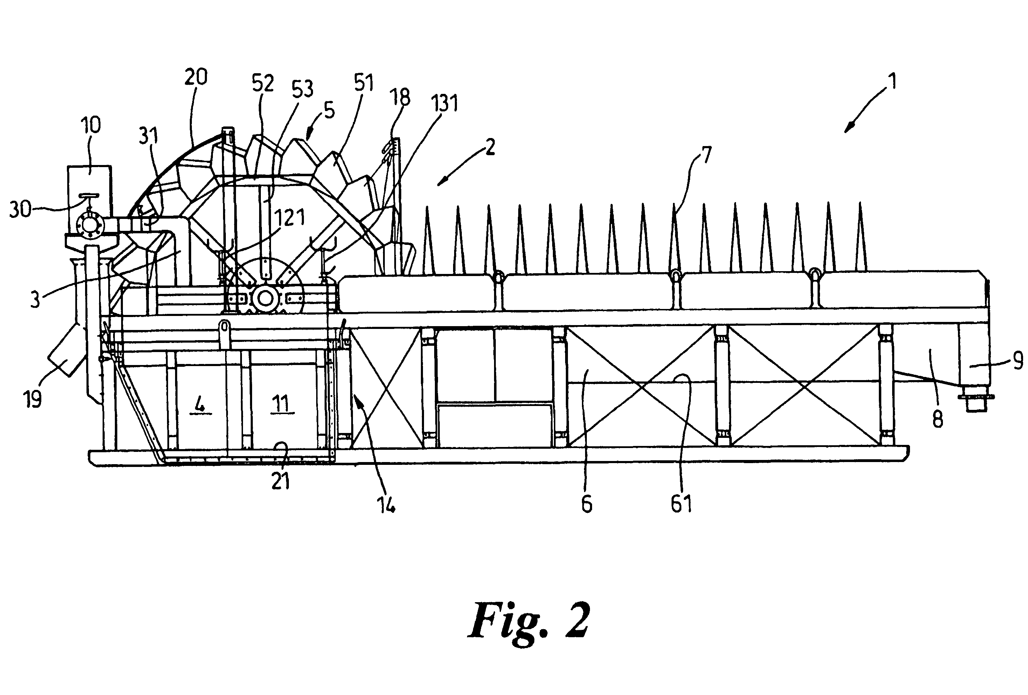

As shown in Figure 2 the base 21 of the inlet section of the settling tank is at a lower level than the base 61 of the outlet section 6 of the settling tank. This provides a well in which the bucket wheel 5 can operate for the efficient removal of settled silt material from the apparatus.

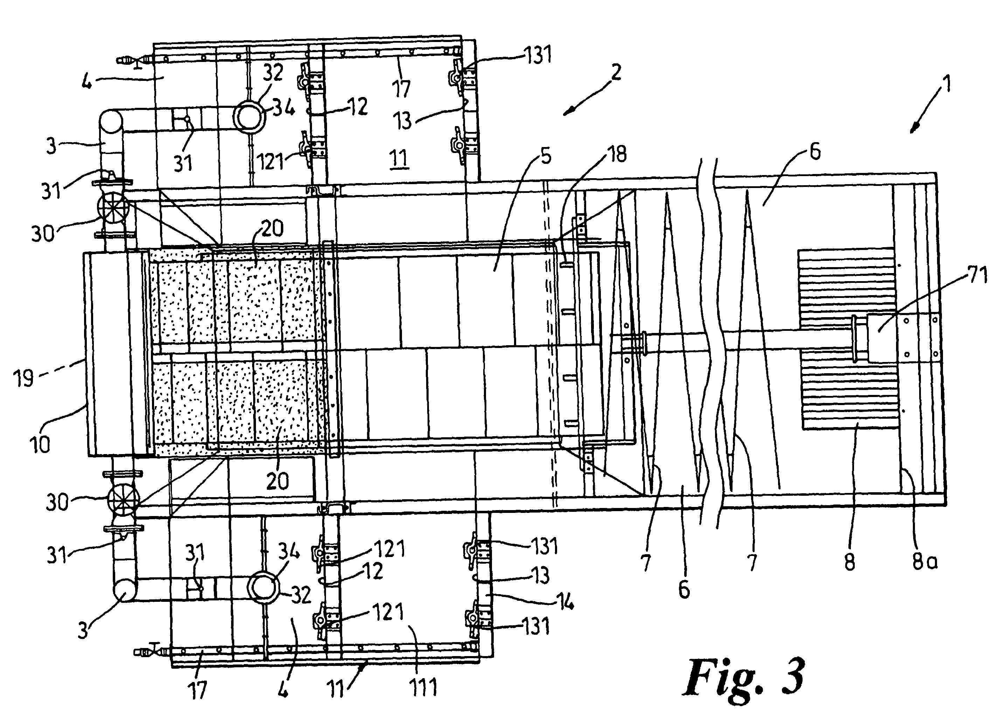

As shown particularly in Figures 1 and 3 the inlet conduit 3 is provided with a sleeve 32 where it enters the pre-reaction vessel 4. Each sleeve 32 surrounds the outlet end 33 of the inlet conduit 3, and with that inlet conduit, defines an annular passage 34 for fluid flow.

The sleeve 32 is adjustable in height so as to vary its projection beyond the outlet end 33 of the inlet conduit 3.

The screw 7 for sweeping settled silt material towards the inlet end 2 of the settling tank 1 is driven by drive motor 71 shown in Figure 3. The silt swept by the screw 7 enters the deeper inlet section 2 of the settling tank where it may be picked up by the bucket wheel 5 and transferred to an outlet discharge chute 19. The material discharge from the outlet chute 19 may fall into a vehicle onto a conveyor or direct to ground. A canopy 20 is provided over the bucket wheels 5 in their discharge quadrant in order to restrain semi solid material from falling into the preceding buckets or to either side of the bucket wheels 5. The canopy 20 may be anchored simply at its upper end, and it may be of a flexible material which will drape to adapt itself to the outer profile of the wheel and so assist in retaining the semi-solid silt in the respective buckets until an appropriate time for discharge into the chute 19.

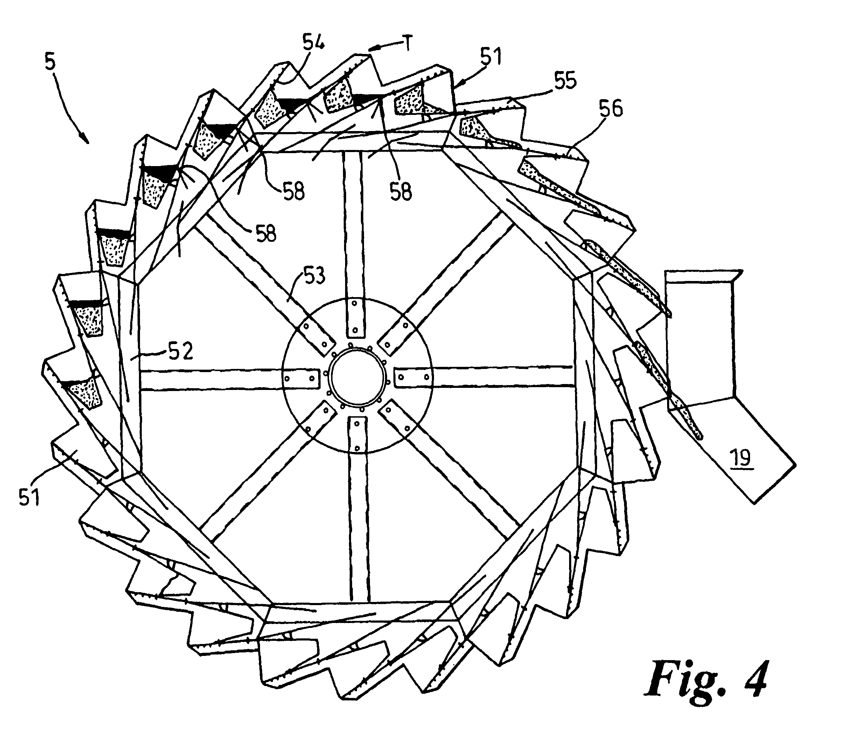

A bucket wheel 5 is shown in greater detail in Figure 4. As may be inferred from Figure 4 the bucket wheel 5 in this particular embodiment consists of eight sub-assemblies each consisting of three buckets 51 assembled to a support bar 52. The support bars 52 are carried at the end of spokes 53 of the bucket wheel 5. A detail of such a three-bucket sub-assembly is shown in Figure 5. As will be seen in Figures 4 and 5 the radially outer face 54 of each bucket 51 is provided with side flanges 55 and these side flanges and the radially outer face 54 of the bucket 51 together serve to define a guide chute which guides collected silt into the discharge chute 19.

At one or both sides of the bucket wheel such side flange 55 is provided with drainage holes 56 through which water may be discharged to fall back into the inlet section 2 of the settling tank. Guide formations 57 are provided on the external radially outward face 54 of the buckets 51 in order to guide water to those holes 56. The guides 57 may take the form of ridges or of channels as desired. Slots 58 are provided in an upper region of each bucket as shown.

Reverting now to Figure 4 it will be seen that as the wheel 5 rotates in a clockwise direction. Silt which has been picked up by the buckets progressively settles leaving a certain amount of water as a surface layer in each bucket. This water may drain out through slots 58 or small holes provided in an upper region of each bucket. We have defined the expression "upper region" as being the upper region of the bucket when it is in the orientation in which it is capable of retaining the maximum amount of fluid. In the Fig. 4 embodiment, there are 24 buckets so they are spaced at 15°. From inspection of that Figure, it will be apparent that this orientation is that of a bucket between 60° and 75° before it reaches it topmost position T.

When the bucket reaches the uppermost position T on the wheel, or shortly thereafter, the water, which is of course less viscous than the silt material, will flow easily over the radially outer face 54 of the immediately preceding bucket and it can be guided by the guides 54 to flow through the holes 56 in the side flanges 55 and thus flow back into the inlet section of the tank. On further rotation, the wet silt contained in the buckets will flow down between the flanges 55 and will eventually fall into the discharge chute 19.

## Claims

1. Apparatus for separating silt from water which comprises a settling tank [1] having an inlet section [2] and an outlet section [6] wherein the base [21] of the inlet section [2] is at a lower level than the base [61] of the outlet section [6], inlet means comprising an inlet conduit [3] leading to a pre-reaction vessel [4] which communicates at its base with the inlet section [2] of the settling tank [2] [21] , said inlet conduit [3] being valved [30], and the apparatus being equipped with dosing means [31] for the addition of flocculant to an inlet portion thereof, removal means [5] for removing settled material from the inlet section [2] of the settling tank and means [7] for sweeping settled material along the tank [1] from an outlet section [6] thereof towards the inlet section [2] thereof, and an outlet for the discharge of water over weir means [8].

2. Apparatus according to claim 1, wherein there is a said inlet conduit [3] and pre-reaction vessel [4] at each side of the settling tank [1].

3. Apparatus according to claim 1 or 2, wherein said dosing means [31] is arranged to add said flocculant to the or a said inlet conduit [3].

4. Apparatus according to any preceding claim, wherein the or a pre-reaction vessel [4] at at least one side of the settling tank [1] is in fluid flow communication with a secondary pre-reaction vessel [11] over weir means [12] located therebetween, the or each such secondary pre-reaction vessel [11] also being in communication at its base with the inlet section [2] of the settling tank [1].

5. Apparatus according to claim 4, wherein the or at least one secondary pre-reaction vessel [11] is in fluid flow communication over weir means [13] with a secondary fluid discharge vessel [14].

6. Apparatus according to claim 4 or 5, wherein the or at least one said weir means [12, 13] bounding a said secondary pre-reaction vessel [11] is adjustable in height.

7. Apparatus according to any preceding claim, wherein the base [41, 111] of the or each pre-reaction vessel [4, 11] slopes downwardly towards the inlet section [2] of the settling tank.

8. Apparatus according to any preceding claim, wherein communication between any said pre-reaction vessel and said settling tank is via a submerged throat [16].

9. Apparatus according to any preceding claim, wherein spraying means [17] is provided for spraying the interior of the or a said pre-reaction vessel [4, 11] for clearing accumulated silt.

10. Apparatus according to any preceding claim, wherein spraying means [18] is provided for spraying water onto said removal means [5] for clearing accumulated silt.

11. Apparatus according to claim 9 or 10, wherein said spraying means [18] is provided with water from said settling tank.

12. Apparatus according to any preceding claim, wherein said outlet section [6] is of part-circular cross-section, and the sweeping means comprises a helical sweeping blade [7], and means [71] for driving such blade in rotation about its axis.

13. Apparatus according to any preceding claim, wherein said removal means comprises a bucket wheel [5].

14. Apparatus according to claim 13, wherein said bucket wheel [5] includes buckets [51] which comprise leakage paths [56-58] for the preferential discharge of water and retention of settled material.

15. Apparatus according to claim 14, wherein any leakage ports [58] in a said bucket [51] are confined to an upper region of the bucket.

16. Apparatus according to claim 15, wherein any leakage ports in a said bucket are confined to an upper third of the bucket.

17. Apparatus according to any of claims 13 to 16, wherein the radially outer face [54] of each bucket is provided with side flanges [55] so as together to define a discharge path for the contents of a next successive bucket.

18. Apparatus according to claim 17, wherein at least one such side flange [55] is perforated [56] for the preferential discharge of water and retention of settled material.

19. Apparatus according to claim 18, wherein one or more run-off strips [57] is or are provided in a said radially outer bucket face for guiding liquid to such perforation (s) [56] in a said flange.

20. Apparatus according to any preceding claim, wherein a sleeve [32] is provided in a said pre-reaction vessel which surrounds said inlet conduit [3] at its outlet end and, with said inlet conduit, defines an annular fluid flow passage [34].

21. Apparatus according to claim 20, wherein said sleeve [32] is adjustable in height to vary its projection beyond the outlet end [33] of the inlet conduit.

22. A method of washing sand or gravel comprising supplying the sand or gravel and washing water to a washing tank, allowing washed sand or gravel to settle and removing it from an inlet section of the tank, sweeping settled sand or gravel along the tank from an outlet section thereof to the inlet section for removal, passing used, silt-containing water from the washing tank to an inlet section [2] of a settling tank [1] via an inlet conduit [3] leading to a pre-reaction vessel [4] which communicates at its base with the settling tank, wherein the base [21] of the inlet section [2] of the settling tank is at a lower level than the base [61] of its outlet section [6], dosing the silt/water mixture with a flocculant, removing settled material from the inlet section [2] of the tank, sweeping settled material along the tank from an outlet section [6] towards such inlet section and discharging substantially silt-free water over an outlet weir [8].

## Patentansprüche

1. Vorrichtung zum Trennen von Schwebstoffen von Wasser, welche einen Absetztank [1], welcher einen Einlaßabschnitt [2] und einen Auslaßabschnitt [6] aufweist, wobei sich die Basis [21] des Einlaßabschnitts [2] auf einem niedrigeren Niveau als die Basis [61] des Auslaßabschnitts [6] befindet, und eine Einlaßeinrichtung umfaßt, welche ein Einlaßrohr [3] umfaßt, welches zu einem Vorreaktionsbehälter [4] führt, welcher an seiner Basis mit dem Einlaßabschnitt [2] des Absetztanks [2][21] verbunden ist, wobei das Einlaßrohr [3] mit einem Ventil [30] versehen ist, und wobei die Vorrichtung mit einer Dosiereinrichtung [31] für die Zugabe eines Flockungsmittels in einen Einlaßabschnitt davon, einer Ausräumeinrichtung [5] zum Ausräumen abgesetzten Materials aus dem Einlaßabschnitt [2] des Absetztanks und einer Einrichtung [7] zum Schieben abgesetzten Materials entlang dem Tank [1] von einem Auslaßabschnitt [6] davon zu dem Einlaßabschnitt [2] davon sowie einem Auslaß für die Ableitung von Wasser über eine Überlaufeinrichtung [8] versehen ist.

2. Vorrichtung nach Anspruch 1, wobei sich ein Einlaßrohr [3] und ein Vorreaktionsbehälter [4] an jeder Seite des Absetztanks [1] befinden.

3. Vorrichtung nach Anspruch 1 oder 2, wobei die Dosiereinrichtung [31] geeignet eingerichtet ist, um das Flockungsmittel in das besagte bzw. in ein besagtes Einlaßrohr [3] zuzugeben.

4. Vorrichtung nach einem der vorangehenden Ansprüche, wobei sich der bzw. ein Vorreaktionsbehälter [4] an mindestens einer Seite des Absetztanks [1] über eine Überlaufeinrichtung [12], welche dazwischen angeordnet ist, in Fluidflußverbindung mit einem sekundären Vorreaktionsbehälter [11] befindet, wobei sich der bzw. jeder derartige sekundäre Vorreaktionsbehälter [11] ferner an dessen Basis in Verbindung mit dem Einlaßabschnitt [2] des Absetztanks [1] befindet.

5. Vorrichtung nach Anspruch 4, wobei sich der sekundäre bzw. mindestens ein sekundärer Vorreaktionsbehälter [11] über eine Überlaufeinrichtung [13] in Fluidflußverbindung mit einem sekundären Fluidableitungsbehälter [14] befindet.

6. Vorrichtung nach Anspruch 4 oder 5, wobei die Überlaufeinrichtungen bzw. mindestens eine Überlaufeinrichtung [12, 13], welche einen sekundären Vorreaktionsbehälter [11] begrenzen bzw. begrenzt, in der Höhe einstellbar sind bzw. ist.

7. Vorrichtung nach einem der vorangehenden Ansprüche, wobei die Basis [41, 111] des bzw. jedes Vorreaktionsbehälters [4, 11] nach unten zu dem Einlaßabschnitt [2] des Absetztanks hin geneigt ist.

8. Vorrichtung nach einem der vorangehenden Ansprüche, wobei die Verbindung zwischen jedem Vorreaktionsbehälter und dem Absetztank mittels einer Tauch-Durchlaßöffnung [16] realisiert ist.

9. Vorrichtung nach einem der vorangehenden Ansprüche, wobei eine Sprüheinrichtung [17] zum Aussprühen des Inneren des bzw. eines Vorreaktionsbehälters [4, 11] zum Reinigen von abgelagerten Schwebstoffen vorgesehen ist.

10. Vorrichtung nach einem der vorangehenden Ansprüche, wobei eine Sprüheinrichtung [18] zum Sprühen von Wasser auf die Ausräumeinrichtung [5] zum Reinigen von abgelagerten Schwebstoffen vorgesehen ist.

11. Vorrichtung nach Anspruch 9 oder 10, wobei die Sprüheinrichtung [18] mit Wasser aus dem Absetztank versorgt wird.

12. Vorrichtung nach einem der vorangehenden Ansprüche, wobei der Auslaßabschnitt [16] einen teilweise kreisförmigen Querschnitt aufweist und die Schiebeeinrichtung eine helixförmige Schubschaufel [7] sowie eine Einrichtung [71] zum Antreiben einer derartigen Schaufel in Drehung um deren Achse umfaßt.

13. Vorrichtung nach einem der vorangehenden Ansprüche, wobei die Ausräumeinrichtung ein Schaufelrad [5] umfaßt.

14. Vorrichtung nach Anspruch 13, wobei das Schaufelrad [5] Schöpfzellen [51] umfaßt, welche Ablaufwege [56-58] für die bevorzugte Ableitung von Wasser sowie Zurückhaltung abgesetzten Materials umfassen.

15. Vorrichtung nach Anspruch 14, wobei jegliche Ablauföffnungen [58] in einer besagten Schöpfzelle [51] auf einen oberen Bereich der Schöpfzelle begrenzt sind.

16. Vorrichtung nach Anspruch 15, wobei jegliche Ablauföffnungen [58] in einer besagten Schöpfzelle [51] auf ein oberes Drittel der Schöpfzelle begrenzt sind.

17. Vorrichtung nach einem der Ansprüche 13 bis 16, wobei die radiale Außenfläche [54] jeder Schöpfzelle derart mit Seitenflanschen [55] versehen ist, daß diese gemeinsam einen Ableitungsweg für den Inhalt einer nächsten folgenden Schöpfzelle definieren.

18. Vorrichtung nach Anspruch 17, wobei mindestens ein derartiger Seitenflansch [55] zur bevorzugten Ableitung von Wasser sowie Zurückhaltung abgesetzten Materials perforiert [56] ist.

19. Vorrichtung nach Anspruch 18, wobei ein oder mehrere Ablaufstreifen [57] in einer besagten radialen Außenfläche einer Schöpfzelle zum Leiten einer Flüssigkeit zu der Perforation bzw. den Perforationen [56] in einem besagten Flansch vorgesehen sind.

20. Vorrichtung nach einem der vorangehenden Ansprüche, wobei eine Hülse [32] in einem Vorreaktionsbehälter vorgesehen ist, welche das Einlaßrohr [3] an dessen Auslaßende umgibt und mit dem Einlaßrohr einen ringförmigen Fluidflußkanal [34] definiert.

21. Vorrichtung nach Anspruch 20, wobei die Hülse [32] in der Höhe einstellbar ist, um deren Hervorstehen über das Auslaßende [33] des Einlaßrohrs hinaus zu ändern.

22. Verfahren zum Waschen von Sand oder Kies, umfassend das Zugeben des Sands bzw. Kieses und Waschwasser in einen Waschtank, das Absetzenlassen gewaschenen Sands bzw. Kieses und das Ausräumen davon aus einem Einlaßabschnitt des Tanks, wobei abgesetzter Sand bzw. Kies zum Ausräumen entlang dem Tank von einem Auslaßabschnitt davon zu dem Einlaßabschnitt geschoben wird, das Leiten gebrauchten, schwebstoffhaltigen Wassers aus dem Waschtank zu einem Einlaßabschnitt [2] eines Absetztanks [1] durch ein Einlaßrohr [3], welches zu einem Vorreaktionsbehälter [4] führt, welcher an seiner Basis mit dem Absetztank verbunden ist, wobei sich die Basis [21] des Einlaßabschnitts [2] des Absetztanks auf einem niedrigeren Niveau als die Basis [61] von dessen Auslaßabschnitt [6] befindet, das dosierte Zugeben eines Flockungsmittels zu der Schwebstoff-Wasser-Mischung, das Ausräumen abgesetzten Materials aus dem Einlaßabschnitt [2] des Tanks, das Schieben abgesetzten Materials entlang dem Tank von einem Auslaßabschnitt [6] zu einem derartigen Einlaßabschnitt und das Ableiten im wesentlichen schwebstofffreien Wassers über eine Auslaß-Überlaufvorrichtung [8].

## Revendications

1. Appareil pour séparer le limon de l'eau, comprenant un réservoir de décantation (1) ayant une partie d'entrée (2) et une partie de sortie (6) et dans lequel la base (21) de la partie d'entrée (2) est à un niveau inférieur à celui de la base (61) de la partie de sortie (6), le dispositif d'entrée comprenant un conduit d'entrée (3) conduisant à un récipient de pré-réaction (4) qui communique par sa base avec la partie d'entrée (2) du réservoir de décantation (2, 21), ledit conduit d'entrée (3) étant équipé d'une vanne (30), et l'appareil étant équipé d'un moyen de dosage (31) permettant d'ajouter un agent de floculation dans la partie d'entrée de celui-ci, d'un moyen d'extraction (5) permettant de retirer le matériau de décantation de la partie d'entrée (2) du réservoir de décantation et de moyens (7) pour balayer le matériau de décantation accumulé le long du réservoir (1) depuis une partie de sortie (6) vers la partie d'entrée (2) de celui-ci, et d'une sortie destinée à l'évacuation de l'eau dans un moyen faisant déversoir (8).

2. Appareil selon la revendication 1, dans lequel sont disposés de chaque côté du réservoir de décantation (1) un dit conduit d'entrée (3) et un récipient de pré-réaction (4).

3. Appareil selon la revendication 1 ou 2, dans lequel ledit moyen de dosage (31) est agencé de manière à ajouter ledit agent de floculation au ou à un dit conduit d'entrée (3).

4. Appareil selon l'une quelconque des revendications précédentes, dans lequel le ou un récipient de pré-réaction (4) disposé d'un côté au moins du réservoir de décantation (1) est en communication fluidique avec un récipient de pré-réaction secondaire (11) par un moyen faisant déversoir (12) qui est placé entre eux deux, le ou chacun des récipients de pré-réaction secondaires (11) étant également en communication au niveau de sa base avec la partie d'entrée (2) du réservoir de décantation (1).

5. Appareil selon la revendication 4, dans lequel le ou au moins un récipient de pré-réaction secondaire (11) est en communication fluidique par un moyen faisant déversoir (13) avec un récipient secondaire d'évacuation (14).

6. Appareil selon la revendication 4 ou 5, dans lequel le ou au moins un desdits moyens faisant déversoir (12, 13) qui limite un dit récipient secondaire de pré-réaction (11) est ajustable en hauteur.

7. Appareil selon l'une quelconque des revendications précédentes, dans lequel la base (41, 111) du ou de chaque récipient de pré-réaction (4, 11) descend vers le bas en direction de la partie d'entrée (2) du réservoir de décantation.

8. Appareil selon l'une quelconque des revendications précédentes, dans lequel la communication entre l'un quelconque des dits récipients de pré-réaction et réservoirs de décantation s'effectue par l'intermédiaire d'une gorge immergée (16).

9. Appareil selon l'une quelconque des revendications précédentes, dans lequel un moyen de pulvérisation (17) est disposé afin de rincer l'intérieur du ou d'un dit récipient de pré-réaction (4, 11) afin d'éliminer le limon accumulé.

10. Appareil selon l'une quelconque des revendications précédentes, dans lequel un moyen de pulvérisation (18) est prévu pour asperger de l'eau sur ledit moyen d'extraction (5) afin d'éliminer le limon accumulé.

11. Appareil selon la revendication 9 ou 10, dans lequel ledit moyen de pulvérisation (18) est alimenté avec l'eau provenant dudit réservoir de décantation.

12. Appareil selon l'une quelconque des revendications précédentes, dans lequel ladite partie de sortie (6) a une section transversale partiellement circulaire, et le moyen de balayage comprend une pale de balayage hélicoïdale (7), et un moyen (71) permettant d'entraîner cette pale dans un mouvement de rotation autour de son axe.

13. Appareil selon l'une quelconque des revendications précédentes, dans lequel ledit moyen d'extraction comprend une roue à godets (5).

14. Appareil selon la revendication 13, dans lequel ladite roue à godets (5) comprend des godets (51) qui comportent des circuits de fuite (56 - 58) destinés à l'évacuation préférentielle de l'eau et à la rétention du matériau de décantation.

15. Appareil selon la revendication 14, dans lequel tous les orifices de fuite (58) d'un des dits godets (51) sont confinés dans une région supérieure du godet.

16. Appareil selon la revendication 15, dans lequel tous les orifices de fuite d'un dit godet sont confinés dans un tiers supérieur du godet.

17. Appareil selon l'une quelconque des revendications 13 à 16, dans lequel la face radialement extérieure (54) de chaque godet est munie de brides latérales (55) formant conjointement un circuit d'évacuation des contenus d'un prochain godet suivant.

18. Appareil selon la revendication 17, dans lequel au moins une bride latérale (55) est perforée (56) pour assurer l'évacuation préférentielle de l'eau et la rétention du matériau de décantation.

19. Appareil selon la revendication 18, dans lequel une ou plusieurs bandes de dégorgement (57) est ou sont disposées dans une dite face de godet radialement extérieure afin de guider le liquide vers la (les) perforation(s) (56) pratiquée(s) dans ladite bride.

20. Appareil selon l'une quelconque des revendications précédentes, dans lequel un manchon (32) est disposé dans un dit récipient de pré-réaction qui entoure ledit conduit d'entrée (3) au niveau de son extrémité extérieure, et qui, avec ledit conduit d'entrée, forme un passage de circulation en anneau (34).

21. Appareil selon la revendication 20, dans lequel ledit manchon (32) est ajustable en hauteur pour faire varier sa projection au-delà de l'extrémité extérieure (33) du conduit d'entrée.

22. Méthode pour laver le sable ou les graviers consistant à amener le sable ou les graviers et l'eau de lavage dans un réservoir de lavage, permettre au sable ou aux graviers lavés de décanter et à les retirer d'une partie d'entrée du réservoir, balayer le sable ou les graviers décantés le long du réservoir depuis une partie de sortie de celui-ci vers la partie d'entrée pour les retirer, en faisant passer des eaux usées contenant du limon du réservoir de lavage dans une partie d'entrée (2) d'un réservoir de décantation (1) par l'intermédiaire d'un conduit d'entrée (3) qui conduit à un récipient de pré-réaction (4) qui communique au niveau de sa base avec le réservoir de décantation, dans lequel la base (21) de la partie d'entrée (2) du réservoir de décantation est à un niveau inférieur à celui de la base (61) de sa partie de sortie (6), à doser le mélange limon / eau avec un agent de floculation, à enlever le matériau de décantation de la partie d'entrée (2) du réservoir, à balayer le matériau de décantation accumulé le long du réservoir entre une partie de sortie (6) et cette partie d'entrée et à évacuer l'eau sensiblement exempte de limon par un déversoir de sortie (8).
